# EUROPÄISCHE PATENTSCHRIFT

(11) **EP 1 762 428 B1**
(45) Veröffentlichungstag und Bekanntmachung des Hinweises auf die Patenterteilung: **08.08.2018**
(21) Anmeldenummer: 06017714.4
(22) Anmeldetag: 25.08.2006
(51) Int. Cl.: B60Q 1/00, B60R 13/04, B60R 11/04, B60R 11/02, B60H 1/26, B60K 11/00

(54) **Verkleidungsteil für ein Kraftfahrzeug**
Trim element for a vehicle
Elément de finition pour un véhicule

(30) Priorität: 08.09.2005 DE 102005042688
(43) Veröffentlichungstag der Anmeldung: 14.03.2007
(73) Patentinhaber: Bayerische Motoren Werke Aktiengesellschaft, 80809 München (DE)
(72) Erfinder: Hildebrand, Gert, 81475 München (DE)
(74) Vertreter: Schernhammer, Herbert

(56) Entgegenhaltungen:
- DE-A1- 2 414 157
- DE-A1- 19 832 201
- FR-A- 2 859 425

## Beschreibung

Die Erfindung betrifft ein Kraftfahrzeug mit einem Kotflügel und einer Seitentür, mit einem Verkleidungsteil zwischen dem Kotflügel und der Seitentür.

Wie allgemein bekannt und beispielsweise in der EP 0 720 944 A2 beschrieben, können als Außenhautbestandteile einer Kraftfahrzeugkarosserie abnehmbare Kunststoffbauteile vorgesehen sein. Im Besonderen ist aus der DE 24 14 157 C2 ein Verkleidungsteil bekannt, das zwischen einem vorderen oder einem hinteren Kotflügel und einer Seitentür angeordnet ist. Dieses Verkleidungsteil ist mit elastischen Clipselementen an dem tragenden Aufbau des Kraftfahrzeuges befestigt und lässt sich leicht vom Aufbau entfernen, so dass der dahinter liegende Radlauf gut zugänglich wird und zur Verhinderung von Korrosionserscheinungen gereinigt werden kann. Ferner weist das aktuelle Fahrzeug Range Rover der Firma Land Rover ein derartiges Verkleidungsteil mit seitlichen Lufteinlässen auf.

Aufgabe der vorliegenden Erfindung ist es, ein Kraftfahrzeug mit einem Verkleidungsteil zwischen dem Kotflügel und der Seitentür dahingehend weiterzubilden, dass ein besonders gleichmäßiger Übergang zwischen dem Kotflügel und der Seitentür ermöglicht wird.

Diese Aufgabe wird durch ein Kraftfahrzeug mit den Merkmalen des Anspruchs 1 gelöst.

Erfindungsgemäß verläuft das Verkleidungsteil unter einem Winkel von ca. 45° zu einer Lotrechten. Durch diese Ausgestaltung wird ein besonders gleichmäßiger Übergang zwischen solchen Kotflügeln und Seitentüren ermöglicht, deren Endabschnitte ebenfalls jeweils unter einem Winkel von ca. 45° verlaufen. Dabei erstreckt sich das Verkleidungsteil über die gesamte Höhenerstreckung des Kotflügels, so dass Kotflügel und Seitentür nicht mehr unmittelbar aneinander grenzen. Das Verkleidungsteil kann weiterhin in seinem oberen Bereich an die Frontklappe und den Windlauf des Fahrzeugs angrenzen.

Gemäß einer Weiterbildung der Erfindung verläuft die vordere sowie die hintere Anschlussfläche des Verkleidungsteils oberflächenbündig zu den benachbarten Karosseriebauteilen: Hierdurch wird ein Fugenbild mit geringen Spaltmaßen ermöglicht.

Bevorzugt steht das Verkleidungsteil zumindest in einem Teil seiner Erstreckung gegenüber der Kontur der umgebenden Bauteile der Karosserie vor.

In einer bevorzugten Ausführungsform der Erfindung weist das Verkleidungsteil eine Luftaustauschöffnung auf.

Besonders vorteilhaft ist es hierbei, in dem Verkleidungsteil neben der Luftaustauschöffnung auch eine Leuchteinheit, insbesondere einen Fahrtrichtungsanzeiger und/oder eine seitliche Begrenzungsleuchte und/oder eine Umfeldbeleuchtung, vorzusehen. Diese Integration einer zusätzlichen Funktion in ein vergleichsweise kleines, leicht austauschbares Verkleidungsteil bietet Vorteile gegenüber der Integration der Leuchteinheit in andere, meist aus einem Metallblech gefertigte Karosseriebauteile wie zum Beispiel Kotflügel, Seitentür, Frontklappe etc.

Mit dem erfindungsgemäßen Verkleidungsteil wird neben der Integration weiterer technischer Funktionen auch eine ästhetische Wirkung erreicht, so dass das Verkleidungsteil als designrelevantes Element eingesetzt werden kann. Durch unterschiedliche Gestaltung des Verkleidungsteils, das gemäß einer Weiterbildung der Erfindung leicht abnehmbar am Aufbau der Kraftfahrzeugkarosserie angeordnet ist, kann mit geringem Aufwand das äußere Erscheinungsbild des Fahrzeuges verändert werden. Durch die Tauschbarkeit des Verkleidungsteils oder einzelner Bestandteile davon können zudem spezifische Zulassungsbedingungen einzelner Länder (beispielsweise gesetzliche Bestimmungen zu seitlichen Fahrtrichtungsanzeigern oder Begrenzungsleuchten) mit geringem Aufwand erfüllt werden, ebenso wie unterschiedliche Anforderungen (zum Beispiel an die Motorraumentlüftung) bei verschiedenen Modellvarianten eines Fahrzeugtyps.

Das Verkleidungsteil wird bevorzugt vor der Seitentür, im Anschluss an den vorderen Kotflügel, angeordnet. Bei dieser Position des Verkleidungsteils zwischen den vorhandenen Anschlussflächen - vorderer Kotflügel, Motorhaube, Windlauf und Seitentür - ist der Ausschnitt, den der Verkleidungsteil ausfüllt, klar definiert. Da bei einer Variation des Verkleidungsteils die genannten Anschlussflächen nicht geändert werden müssen, kann das äußere Erscheinungsbild des Fahrzeuges in großer Variantenvielfalt bei vergleichsweise geringem Kosten- und Entwicklungsaufwand verändert werden. Aufgrund der Position des Verkleidungsteils zwischen der Fronthaube und der Seitentür lassen sich die Montagetoleranzen der beweglichen Teile (Frontklappe, Seitentür) einfacher aufeinander abstimmen, wodurch die Montage vereinfacht wird, bei gleichzeitig verbessertem äußeren Erscheinungsbild des Fahrzeugs (gleichmäßiges Fugenbild mit geringen Spaltmaßen).

Unter dem Begriff "Umfeldbeleuchtung" wird in Zusammenhang mit der vorliegenden Erfindung eine Lichtquelle verstanden, die zur Beleuchtung des unmittelbaren Umfeldes des stehenden Fahrzeugs dient. Die Umfeldbeleuchtung wird beispielsweise durch Knopfdruck auf einen fernbedienbaren Fahrzeugschlüssel aktiviert, um dem Nutzer bei Dunkelheit die Annäherung an sein Fahrzeug zu erleichtern. Die Umfeldbeleuchtung erhellt beispielsweise den Fahrbahnbereich neben der Seitentür und ist bei bekannten Fahrzeugen in ein Außenspiegelgehäuse oder in den Bereich eines Türaußengriffes integriert. Durch die erfindungsgemäße Integration der Umfeldbeleuchtung in ein Verkleidungsteil mit einer Luftaustauschöffnung, das zwischen Kotflügel und Seitentür angeordnet ist, wird eine Beleuchtung nicht nur des Bereiches neben der Seitentür, sondern auch des Bereiches vor der Seitentür erreicht.

Unter den Begriff Umfeldbeleuchtung" fallen auch solche Lichtquellen, die hauptsächlich Abschnitte des Fahrzeugs selbst anstrahlen und weniger das Umfeld des Fahrzeugs. Durch die beleuchteten Fahrzeugpartien wird dem Fahrzeugnutzer die Annäherung an sein Fahrzeug ebenfalls erleichtert. Außerdem leuchtet das von den Fahrzeugpartien reflektierte Streulicht auch die Umgebung des Fahrzeugs aus, wenngleich in geringerem Maße als dies bei einer direkten Umfeldbeleuchtung der Fall ist.

Selbstverständlich kann ein in eine Luftaustauschöffnung integrierter seitlicher Fahrtrichtungsanzeiger auch mit einer seitlichen Begrenzungsleuchte und/oder mit einer Umfeldbeleuchtung und/oder mit anderen Leuchteinheiten kombiniert sein und umgekehrt.

Gemäß einer Weiterbildung der Erfindung kann in das Verkleidungsteil anstelle oder zusätzlich zu einer Leuchteinheit auch eine Detektoreinheit, insbesondere ein Sensor und/oder eine Kamera, integriert sein. Mit dem Sensor können alle denkbaren physikalischen Größen erfasst werden. Insbesondere dient der Sensor jedoch der Erfassung des seitlichen Abstandes zu einem Hindernis oder einem anderen Verkehrsteilnehmer, um beispielsweise eine Einparkhilfe oder eine Einrichtung zur Begrenzung des Türöffnungswinkels anzusteuern. Auch eine erfindungsgemäß vorgesehene Kamera kann den genannten Zwecken dienen. Die bei der Integration der Leuchteinheiten erzielten Vorteile, insbesondere die Integration technischer Funktionen, gelten in analoger Weise auch für die Integration der Detektoreinheit in das Verkleidungsteil.

Bevorzugt steht das Verkleidungsteil zumindest in einem Teil seiner Erstreckung gegenüber der Kontur der umgebenden Bauteile der Karosserie vor. Hierdurch wird die Wirksamkeit einer Luftaustauschöffnung in strömungstechnischer Hinsicht verbessert und die Wahrnehmbarkeit eines seitlichen Fahrtrichtungsanzeigers verbessert.

In einer besonders bevorzugten Ausführungsform ist die Luftaustauschöffnung als Aufnahme für die Leuchteinheit und/oder die Detektoreinheit ausgebildet. Somit sind insbesondere der seitliche Fahrtrichtungsanzeiger und/oder die seitliche Begrenzungsleuchte für die Verkehrsteilnehmer aus einem sehr großen Winkelbereich gut sichtbar. Im Fall der Umfeldbeleuchtung und/oder des Sensors und/oder der Kamera ergibt sich für die genannten Komponenten ein großer Abstrahl- bzw. Erfassungsbereich. Außerdem lassen sich alle genannten Komponenten mit geringem Aufwand in das Gehäuse der Luftaustauschöffnung integrieren. Insbesondere der Fahrtrichtungsanzeiger, aber auch andere Leuchteinheiten, können dabei in vorteilhafter Weise so ausgestaltet sein, dass sie zumindest abschnittsweise einen Teil der Luftaustauschöffnung oder des Luftführungskanals bilden, wodurch sich der bauliche Aufwand für die Luftaustauschöffnung reduziert.

In einer weiteren Ausführungsform der Erfindung besteht das Verkleidungsteil aus einem metallischen Werkstoff, beispielsweise poliertem Aluminium und ist mit Einsatzteilen aus einem anderen Werkstoff, beispielsweise einem Kunststoffmaterial, für die Luftaustauschöffnung und/oder die Leuchteinheit und/oder die Detektoreinheit ausgestattet.

Die Luftaustauschöffnung kann auch als "Attrappe" ausgeführt sein, indem sie keine technische Funktion, sondern nur eine ästhetische Funktion wahrnimmt. In vielen Fällen ist eine Entlüftung des Motorraums aus thermischen Gründen nicht erforderlich oder wegen der ansonsten beeinträchtigten Dämmung von Motorgeräuschen sogar unerwünscht. Insbesondere bei sportlichen Fahrzeugen sind Attrappen von seitlichen Luftaustrittsöffnungen weit verbreitet. Für die vorliegende Erfindung ist es ohne Bedeutung, ob eine Luftaustrittsöffnung tatsächlich als solche wirkt oder als Attrappe ausgeführt ist und damit im eigentlichen Sinn gar keine Öffnung aufweist.

Weitere vorteilhafte Ausführungsformen der Erfindung sind Gegenstand von Unteransprüchen.

Mögliche Ausführungsformen der Erfindung sind in der Zeichnung dargestellt und werden nachfolgend näher erläutert. Es zeigt:
- Fig. 1: ein Kraftfahrzeug mit einem erfindungsgemäßen Verkleidungsteil in der Seitenansicht,
- Fig. 2: ein Kraftfahrzeug mit einer zweiten Ausführungsform eines erfindungsgemäßen Verkleidungsteils, in einer perspektivischen Ansicht von schräg vorne,
- Fig. 3: ein drittes Ausführungsbeispiel eines Verkleidungsteils, in perspektivischer Darstellung,
- Fig. 4: eine Schnittdarstellung entlang der Schnittverlaufslinie IV-IV in Fig. 3,
- Fig. 5: ein viertes Ausführungsbeispiel eines Verkleidungsteils, in perspektivischer Darstellung,
- Fig. 6: ein fünftes Ausführungsbeispiel eines Verkleidungsteils,
- Fig. 7: das Verkleidungsteil von Fig. 6 in Explosionsdarstellung und
- Fig. 8: eine Schnittdarstellung entlang der Schnittverlaufslinie VIII-VIII in Fig. 6.

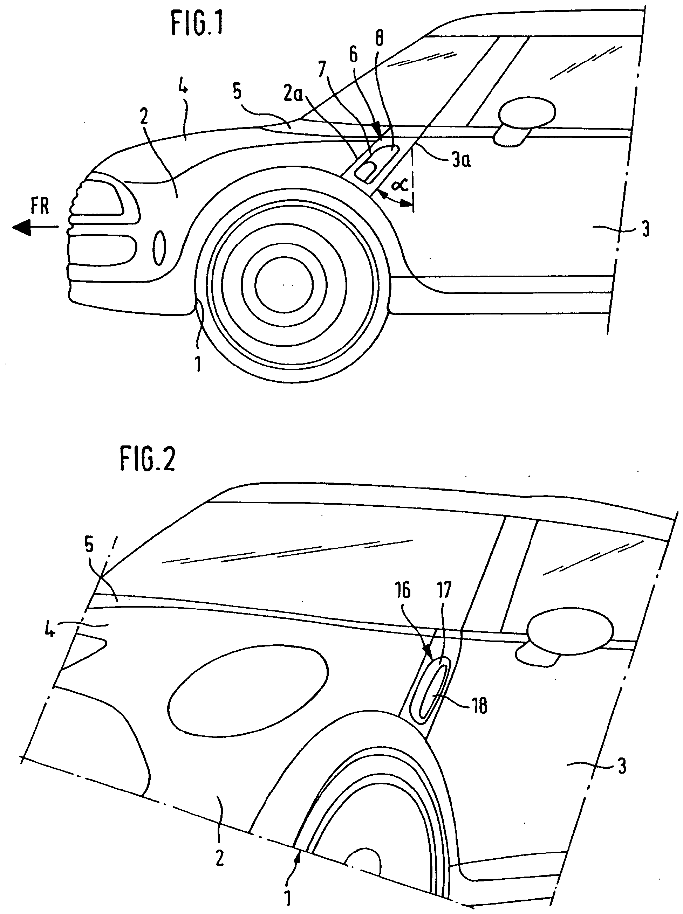

Fig. 1 zeigt einen vorderen Abschnitt eines Kraftfahrzeuges, mit einem Radausschnitt 1, an den sich ein Kotflügel 2 und eine Seitentür 3 anschließen. Außerdem weist das Kraftfahrzeug eine Frontklappe 4 sowie einen Windlauf 5 auf.

Erfindungsgemäß ist zwischen dem der Fahrtrichtung FR abgewandten hinteren Endabschnitt 2a des Kotflügels 2 und dem der Fahrtrichtung FR zugewandten vorderen Endabschnitt 3a der Seitentür 3 ein in seiner Gesamtheit mit 6 bezeichnetes Verkleidungsteil vorgesehen. Das Verkleidungsteil 6 grenzt in seinem oberen Bereich weiterhin an die Frontklappe 4 und den Windlauf 5 an. Es verläuft unter einem Winkel α von etwa 45° gegenüber der Lotrechten. Das Verkleidungsteil 6 erstreckt sich über die gesamte Höhe des Kotflügels 2.

Das Verkleidungsteil 6 weist eine Luftaustauschöffnung 7 sowie eine Leuchteinheit in Form eines seitlichen Fahrtrichtungsanzeigers 8 auf. Die Luftaustauschöffnung 7 ist beispielsweise als Motorraumbelüftung ausgestaltet. Die vordere sowie die hintere Anschlussfläche des Verkleidungsteils 6 verläuft oberflächenbündig zu den benachbarten Karosseriebauteilen 2 bis 5, wobei durch die erfindungsgemäße Konstruktion ein Fugenbild mit geringen Spaltmaßen möglich ist. Die Luftaustauschöffnung 7 wölbt sich hutzenartig gegenüber der Kontur von Kotflügel 2 und Seitentür 3 vor, wodurch der integrierte Fahrtrichtungsanzeiger 8 eine exponierte Stellung erhält. Die Luftaustauschöffnung 7 befindet sich in einem Gebiet, in dem während der Fahrt des Kraftfahrzeuges Unterdruck herrscht, so dass eine besonders wirksame Entlüftung des Motorraums erreicht wird. Die hutzenartige Ausbildung der Luftaustauschöffnung 7 verbessert die Wärmeabführung aus dem Motorraum weiter.

Fig. 2 zeigt ein zweites Ausführungsbeispiel eines Verkleidungsteils 16, das in analoger Weise zu dem Verkleidungsteil 6 aus Fig. 1 angeordnet ist und sich vor allem in der Hutzenform der Luftaustauschöffnung 17 von der Ausführungsform gemäß Fig. 1 unterscheidet. Besonders deutlich ist in Fig. 2 der seitliche Fahrtrichtungsanzeiger 18 zu erkennen.

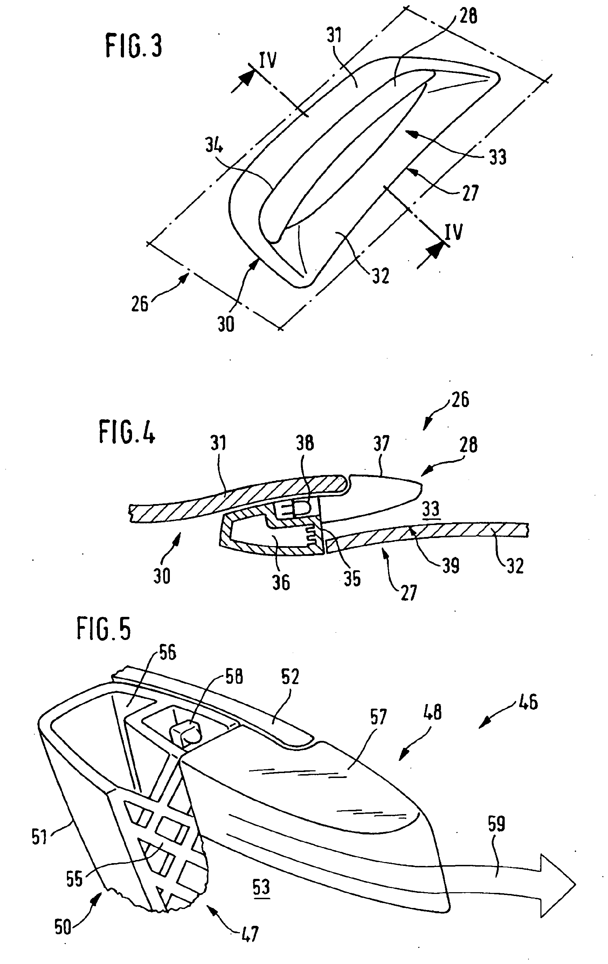

Fig. 3 zeigt ein drittes Ausführungsbeispiel eines erfindungsgemäßen Verkleidungsteils 26 in vergrößerter perspektivischer Darstellung. Das Verkleidungsteil 26 besteht aus einer Leichtmetalllegierung, bevorzugt einer Aluminiumlegierung, deren Oberfläche poliert ist. In einen Ausschnitt des Verkleidungsteils 26 ist ein Gehäuse 30 einer in ihrer Gesamtheit mit 27 bezeichneten Luftaustauschöffnung eingesetzt. Das Gehäuse 30 wölbt sich hutzenartig gegenüber der Kontur des Verkleidungsteils 26 vor und weist eine äußere sowie eine innere Begrenzungswand 31 bzw. 32 auf, die einen Luftführungskanal 33 begrenzen. Am freien Endabschnitt 34 der äußeren Begrenzungswand 31 ist ein in seiner Gesamtheit mit 28 bezeichneter seitlicher Fahrtrichtungsanzeiger angeordnet.

Die Schnittdarstellung der Fig. 4 zeigt den Aufbau des Verkleidungsteils 26 näher. Insbesondere geht aus Fig. 4 der Verlauf des Luftführungskanals 33 näher hervor, dessen fahrzeugaußenseitiger Abschnitt 39 durch ein Gitter 35, das den Eintritt von Fremdkörpern in einen Verbindungsraum 36 zum Motorraum verhindert, abgegrenzt ist. Der Verbindungsraum 36 wird von der äußeren Begrenzungswand 31 des Gehäuses 30 der Luftaustauschöffnung 27 hutzenförmig abgedeckt. Die Kontur der äußeren Begrenzungswand 31 wird durch eine Abdeckung 37 des seitlichen Fahrtrichtungsanzeigers 28 fortgesetzt, wobei die Innenseite der Abdeckung 37 den fahrzeugaußenseitigen Abschnitt 39 des Luftführungskanals 33 bildet. Innenseitig schließt sich an die Abdeckung 37 eine Mehrzahl von Leuchtdioden 38 des Fahrtrichtungsanzeigers 28 an.

Das Gehäuse 30 der Luftaustauschöffnung 27 besteht bevorzugt aus einem Kunststoffmaterial, das sich farblich und/oder in seiner Oberflächengestaltung vom Material des Verkleidungsteils 26 abhebt. Somit kommt dem Verkleidungsteil 26 mit seinen einzelnen Bestandteilen auch eine ästhetische Funktion zu. Das äußere Erscheinungsbild kann durch Variation des Verkleidungsteils 26 selbst oder des Gehäuses 30 oder der Abdeckung 37 in einfacher Weise verändert werden. Das Verkleidungsteil 26 ist leicht abnehmbar an der Tragstruktur des Kraftfahrzeuges befestigt.

Fig. 5 zeigt ein viertes Ausführungsbeispiel eines Verkleidungsteils 46, das sich in der Gestaltung des Gehäuses 50 der Luftaustauschöffnung 47 vom Verkleidungsteil 26 gemäß den Fig. 3 und 4 unterscheidet. Im Unterschied zu dem vorgenannten Verkleidungsteil 26 ist die Abdeckung 57 des seitlichen Fahrtrichtungsanzeigers 48 in Fortsetzung der inneren Begrenzungswand 52 des Gehäuses 50 angeordnet. Der Pfeil 59 beschreibt die Richtung der Luftströmung, die im Luftführungskanal 53 geführt wird. Äußere Begrenzungswand 51, Gitter 55, Verbindungsraum 56 und Leuchtdioden 58 sind grundsätzlich analog den entsprechenden Bauteilen des dritten Ausführungsbeispiels gestaltet.

Dem dritten und vierten Ausführungsbeispiel ist also gemeinsam, dass ein Teil des seitlichen Fahrtrichtungsanzeigers 28 bzw. 48, nämlich die Abdeckung 37 bzw. 57, einen Teil der Luftaustauschöffnung 27 bzw. 47 bilden, nämlich einen fahrzeugäußeren Abschnitt des Luftführungskanals 33 bzw. 53. In umgekehrter Betrachtung können Teile der Luftaustauschöffnung 27 bzw. 47 zumindest abschnittsweise den seitlichen Fahrtrichtungsanzeiger 28 bzw. 48 bilden. Durch diese Integration reduziert sich der bauliche Aufwand.

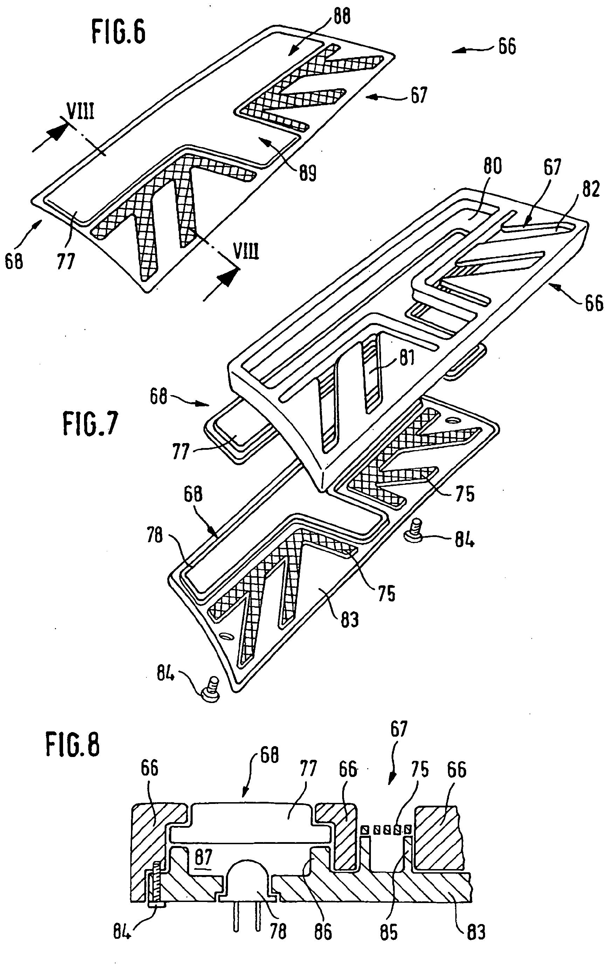

Die Fig. 6 bis 8 zeigen ein fünftes Ausführungsbeispiel der Erfindung, mit einem in seiner Gesamtheit mit 66 bezeichneten Verkleidungsteil, das in Fig. 6 im zusammengebauten Zustand dargestellt ist. Die Explosionsdarstellung gemäß Fig. 7 und die Schnittdarstellung nach Fig. 8 zeigen die einzelnen Bauteile des Verkleidungsteils 66 näher.

Das Verkleidungsteil 66 besteht aus einem Leichtmetallwerkstoff, wiederum bevorzugt poliertem Aluminium, und ist mit Aussparungen 80, 81 und 82 versehen. Unterhalb des Verkleidungsteils 66 befindet sich eine Abdeckung 77 für den in seiner Gesamtheit mit 68 bezeichneten Fahrtrichtungsanzeiger, die in die Aussparung 80 einsetzbar ist. Des Weiteren ist unterhalb des Verkleidungsteils 66 eine Trägerplatte 83 angeordnet, auf der neben Leuchtdioden 78 des Fahrtrichtungsanzeigers 68 auch Gitter 75 einer in ihrer Gesamtheit mit 67 bezeichneten Luftaustauschöffnung vorgesehen sind. Die Trägerplatte 83 ist über Schrauben 84 am Verkleidungsteil 66 befestigt. Dabei greifen die Gitter 75 in die Aussparungen 81 und 82 des Verkleidungsteils 66 ein, wie näher aus der Schnittdarstellung der Fig. 8 hervorgeht. Die Gitter 75 sind hierbei höhenversetzt gegenüber der Trägerplatte 83 an Stegen 85 festgelegt. Auch die Anordnung der Leuchtdioden 78 an der Trägerplatte 83 sowie weitere Stege 86, die Leuchtkammern 87 des Fahrtrichtungsanzeigers 68 begrenzen, gehen aus Fig. 8 näher hervor.

Neben der technischen Funktion des Verkleidungsteils 66 mit dem Fahrtrichtungsanzeiger 68 sowie den Luftaustauschöffnungen 67 kommt dem Verkleidungsteil 66 auch eine ästhetische Funktion zu. So ist die Abdeckung 77 des Fahrtrichtungsanzeigers 68 aus einem eingefärbten Acrylglas mit einer polierten Front und einer mattierten Rückseite gefertigt. Die Abdeckung 77 ist T-förmig, mit einem sich über die nahezu gesamte Längserstreckung des Verkleidungsteils 66 erstreckenden ersten Schenkel 88 sowie einem quer dazu verlaufenden Schenkel 89. Die Aussparungen 81 und 82 für die Luftaustauschöffnungen 67 bilden Ausschnitte einer Flagge nach und werden durch die mattschwarzen Gitter 75 in farbigem Kontrast sowohl zur polierten Oberfläche des aus Aluminium gefertigten Verkleidungsteils 66 als auch der farbigen Abdeckung 77 hergestellt. Die ineinander greifenden Formen der Abdeckung 77 und der Aussparungen 81 und 82 ermöglichen einen großflächigen Fahrtrichtungsanzeiger 68 sowie großflächige Luftaustauschöffnungen 67.

Die Verkleidungsteile 6, 16, 26, 46 und 66 sind als Vormontageeinheiten ausgestaltet, die außerhalb des Fahrzeuges komplett zusammengesetzt werden und als eine Baueinheit am Fahrzeug befestigt bzw. vom Fahrzeug wieder abgenommen werden können.

Die Verkleidungsteile 6, 16, 26, 46 und 66 ermöglichen eine technisch einfache Integration der Funktionen "Fahrtrichtung anzeigen" und "Luftaustausch" (Be- und/oder Entlüftung). Die technischen Funktionen werden gleichzeitig als stilistische Merkmale aufgegriffen und farblich und/oder durch die Werkstoffauswahl und/oder durch entsprechende geometrische Formen und Oberflächengestaltungen bewusst akzentuiert. Hierdurch ergeben sich Differenzierungsmöglichkeiten gegenüber Fahrzeugen des Wettbewerbs.

Die Verkleidungsteile 6, 16, 26, 46 und 66 können vom Fahrzeughersteller während der Modelllaufzeit eines Fahrzeuges geändert werden, um das äußere Erscheinungsbild des Fahrzeugs mit einfachen Mitteln und geringem Kostenaufwand gezielt zu verändern. Auch der Fahrzeugnutzer hat die kostengünstige Möglichkeit, durch Austausch der Verkleidungsteile das Fahrzeug während der Haltedauer in seinem äußeren Erscheinungsbild zu verändern. Außerdem können bei Beschädigungen die Verkleidungsteile einfach ausgetauscht werden.

Anstelle oder zusätzlich zum Fahrtrichtungsanzeiger können auch andere Leuchteinheiten, wie beispielsweise eine seitliche Begrenzungsleuchte und/oder eine Umfeldbeleuchtung, vorgesehen sein. Ebenso können alternativ oder zusätzlich Detektoreinheiten, wie beispielsweise ein Sensor und/oder eine Kamera, vorgesehen sein.

Selbstverständlich können auch andere technische Funktionen und stilistische Merkmale in ein erfindungsgemäßes Verkleidungsteil integriert werden, wie beispielsweise akustische Signalgeber (Lautsprecher, Hupe etc.), Signalempfänger (Antenne, IR-Empfänger etc.), Embleme, Modellbezeichnungen etc.

## Patentansprüche

1. Verkleidungsteil für ein Kraftfahrzeug mit einem Kotflügel und einer Seitentür, wobei das Verkleidungsteil zwischen dem Kotflügel und der Seitentür angeordnet ist, wobei,
dass das Verkleidungsteil (6, 16, 26, 46, 66) zwischen den aufeinander zugewandten Endabschnitten (2a 3a) von Kotflügel (2) und Seitentür (3) angeordnet ist, **dadurch gekennzeichnet, dass** die Endabschnitte (2a; 3a) von Kotflügel (2) und Seitentür (3) - in Blickrichtung quer zur Fahrtrichtung (FR) des Kraftfahrzeuges - unter einem Winkel (α) von etwa 45° zu einer Lotrechten verlaufen und das Verkleidungsteil (6, 16, 26, 46, 66) ebenfalls unter einem Winkel (α) von etwa 45° zu einer Lotrechten verläuft und wobei sich das Verkleidungsteil (6, 16, 26, 46, 66) über die gesamte Höhenerstreckung des Kotflügels (2) erstreckt, so dass Kotflügel (2) und Seitentür (3) nicht mehr unmittelbar aneinander grenzen.

2. Verkleidungsteil nach Anspruch 1,
**dadurch gekennzeichnet, dass** die vordere sowie die hintere Anschlussfläche des Verkleidungsteils (6, 16, 26, 46, 66) oberflächenbündig zu den benachbarten Karosseriebauteilen (2 bis 5) verläuft.

3. Verkleidungsteil nach Anspruch 1 oder 2,
**dadurch gekennzeichnet, dass** das Verkleidungsteil (6, 16, 26, 46, 66) zumindest in Teilbereichen seiner Erstreckung gegenüber der Kontur von Kotflügel (2) und/oder Seitentür (3) vorsteht.

4. Verkleidungsteil nach einem der vorgenannten Ansprüche,
**dadurch gekennzeichnet, dass** das Verkleidungsteil (6, 16, 26, 46, 66) zwischen dem fahrtrichtungsabgewandten Endabschnitt (2a) eines vorderen Kotflügels (2) und dem fahrtrichtungszugewandten Endabschnitt (3a) einer Seitentür (3) angeordnet ist.

5. Verkleidungsteil nach einem der vorgenannten Ansprüche,
**dadurch gekennzeichnet, dass** das Verkleidungsteil (6, 16, 26, 46, 66) in seinem oberen Bereich an eine Frontklappe (4) und einen Windlauf (5) angrenzt.

6. Verkleidungsteil nach einem der vorgenannten Ansprüche,
**dadurch gekennzeichnet, dass** das Verkleidungsteil (6, 16, 26, 46, 66) eine Luftaustauschöffnung (7) aufweist.

7. Verkleidungsteil nach einem der vorgenannten Ansprüche,
**dadurch gekennzeichnet, dass** das Verkleidungsteil (6, 16, 26, 46, 66) eine Leuchteinheit, insbesondere einen seitlichen Fahrtrichtungsanzeiger (8, 18, 28, 48, 68) und/oder eine seitliche Begrenzungsleuchte und/oder eine Umfeldbeleuchtung, aufweist.

8. Verkleidungsteil nach einem der vorgenannten Ansprüche,
**dadurch gekennzeichnet, dass** das Verkleidungsteil (6, 16, 26, 46, 66) eine Detektoreinheit, insbesondere einen Sensor und/oder eine Kamera, aufweist.

9. Verkleidungsteil nach einem der vorgenannten Ansprüche,
**dadurch gekennzeichnet, dass** die Luftaustauschöffnung (7, 17, 27, 47) als Aufnahme für die Leuchteinheit (8, 18, 28, 48) und/oder die Detektoreinheit ausgebildet ist.

10. Verkleidungsteil nach einem der vorgenannten Ansprüche,
**dadurch gekennzeichnet, dass** die Luftaustauschöffnung (7, 17, 27, 47, 67) und/oder die Leuchteinheit (8, 18, 28, 48, 68) und/oder die Detektoreinheit in Material und/oder Oberflächengestaltung vom Verkleidungsteil (6, 16, 26, 46, 66) abweichen.

11. Verkleidungsteil nach einem der vorgenannten Ansprüche,
**dadurch gekennzeichnet, dass** das Verkleidungsteil (6, 16, 26, 46, 66) aus einem metallischen Werkstoff besteht.

12. Verkleidungsteil nach einem der vorgenannten Ansprüche,
**dadurch gekennzeichnet, dass** das Verkleidungsteil (66) wenigstens eine Ausnehmung (80, 81, 82) aufweist, die von einem Bestandteil der Luftaustauschöffnung (7, 17, 27, 47, 67) und/oder der Leuchteinheit (8, 18, 28, 48, 68) und/oder die Detektoreinheit zumindest teilweise ausgefüllt wird.

13. Verkleidungsteil nach einem der vorgenannten Ansprüche,
**dadurch gekennzeichnet, dass** die Luftaustauschöffnung (7, 17, 27, 47, 67) und die Leuchteinheit (8, 18, 28, 48, 68) und/oder die Detektoreinheit ineinander greifende geometrische Formen aufweisen.

14. Verkleidungsteil nach einem der vorgenannten Ansprüche,
**dadurch gekennzeichnet, dass** das Verkleidungsteil (66) durch ein in Einbaulage am Kraftfahrzeug unterhalb des Verkleidungsteils (66) angeordnetes Trägerbauteil (83) zu einer vor der Montage an das Kraftfahrzeug zusammensetzbaren Baueinheit ergänzt wird, wobei am Trägerbauteil (83) wenigstens ein Bestandteil der Luftaustauschöffnung (67) und/oder der Leuchteinheit (68) und/oder der Detektoreinheit angeordnet ist.

15. Verkleidungsteil nach einem der vorgenannten Ansprüche,
**dadurch gekennzeichnet, dass** die Leuchteinheit (28, 48) und/oder die Detektoreinheit zumindest in Abschnitten (37, 57) Bereiche (33, 53) der Luftaustauschöffnung (27, 47) bildet.

16. Verkleidungsteil nach Anspruch 15,
**dadurch gekennzeichnet, dass** die Luftaustauschöffnung (27, 47) eine äußere und eine innere Begrenzungswand (31, 51; 32, 52) aufweist, wobei die Begrenzungswände (31, 51; 32, 52) in Querrichtung des Kraftfahrzeuges zueinander versetzt sind und wobei die Leuchteinheit (28; 48) und/oder die Detektoreinheit eine Abdeckung (37; 57) aufweist, die sich an die äußere oder die innere Begrenzungswand (31; 52) anschließt.

17. Verkleidungsteil nach einem der vorgenannten Ansprüche,
**dadurch gekennzeichnet, dass** das Verkleidungsteil (6, 16, 26, 46, 66) abnehmbar am Kraftfahrzeug angeordnet ist.

## Claims

1. A trim part for a motor vehicle with a wing part and a side door, wherein the trim part is arranged between the wing part and the side door, wherein the trim part (6, 16, 26, 46, 66) is arranged between the end portions (2a, 3a) of the wing part (2) and side door (3) which face each other, **characterised in that** the end portions (2a; 3a) of the wing part (2) and side door (3) - in the viewing direction transversely to the direction of travel (FR) of the motor vehicle - run at an angle (α) of approximately 45° to a perpendicular and the trim part (6, 16, 26, 46, 66) likewise runs at an angle (α) of approximately 45° to a perpendicular and wherein the trim part (6, 16, 26, 46, 66) extends over the entire vertical extent of the wing part (2), so that the wing part (2) and side door (3) no longer directly adjoin each other.

2. A trim part according to Claim 1,
**characterised in that** the front and also the rear connection face of the trim part (6, 16, 26, 46, 66) run with flush surfaces relative to the adjacent body components (2 to 5).

3. A trim part according to Claim 1 or Claim 2,
**characterised in that** the trim part (6, 16, 26, 46, 66), at least in partial regions of its extent, protrudes relative to the contour of the wing part (2) and/or side door (3).

4. A trim part according to one of the aforementioned claims,
**characterised in that** the trim part (6, 16, 26, 46, 66) is arranged between the end portion (2a) of a front wing part (2) which faces away from the direction of travel and the end portion (3a) of a side door (3) which faces the direction of travel.

5. A trim part according to one of the aforementioned claims,
**characterised in that** the trim part (6, 16, 26, 46, 66) in its upper region adjoins a bonnet (4) and a windscreen panel (5).

6. A trim part according to one of the aforementioned claims,
**characterised in that** the trim part (6, 16, 26, 46, 66) has an air exchange opening (7).

7. A trim part according to one of the aforementioned claims,
**characterised in that** the trim part (6, 16, 26, 46, 66) has a lamp unit, especially a side direction indicator (8, 18, 28, 48, 68) and/or a side clearance lamp and/or approach lighting.

8. A trim part according to one of the aforementioned claims,
**characterised in that** the trim part (6, 16, 26, 46, 66) has a detector unit, epsecially a sensor and/or a camera.

9. A trim part according to one of the aforementioned claims,
**characterised in that** the air exchange opening (7, 17, 27, 47) is designed as a receptacle for the lamp unit (8, 18, 28, 48) and/or the detector unit.

10. A trim part according to one of the aforementioned claims,
**characterised in that** the air exchange opening (7, 17, 27, 47, 67) and/or the lamp unit (8, 18, 28, 48, 68) and/or the detector unit differ(s) from the trim part (6, 16, 26, 46, 66) in terms of material and/or surface configuration.

11. A trim part according to one of the aforementioned claims,
**characterised in that** the trim part (6, 16, 26, 46, 66) comprises a metallic material.

12. A trim part according to one of the aforementioned claims,
**characterised in that** the trim part (66) has at least one cutout (80, 81, 82) which is at least partially filled by a component of the air exchange opening (7, 17, 27, 47, 67) and/or of the lamp unit (8, 18, 28, 48, 68) and/or the detector unit.

13. A trim part according to one of the aforementioned claims,
**characterised in that** the air exchange opening (7, 17, 27, 47, 67) and the lamp unit (8, 18, 28, 48, 68) and/or the detector unit have geometric forms which engage in one another.

14. A trim part according to one of the aforementioned claims,
**characterised in that** the trim part (66) is supplemented by a support component (83) arranged in the installation position on the motor vehicle beneath the trim part (66) to form a structural unit which can be assembled prior to being mounted on the motor vehicle, with at least one component of the air exchange opening (67) and/or of the lamp unit (68) and/or of the detector unit being arranged on the support component (83).

15. A trim part according to one of the aforementioned claims,
**characterised in that** the lamp unit (28, 48) and/or the detector unit at least in portions (37, 57) form(s) regions (33, 53) of the air exchange opening (27, 47).

16. A trim part according to Claim 15,
**characterised in that** the air exchange opening (27, 47) has an outer and an inner delimiting wall (31, 51; 32, 52), the delimiting walls (31, 51; 32, 52) being offset relative to each other in the transverse direction of the motor vehicle and the lamp unit (28; 48) and/or the detector unit having a cover (37; 57) which adjoins the outer or the inner delimiting wall (31; 52).

17. A trim part according to one of the aforementioned claims,
**characterised in that** the trim part (6, 16, 26, 46, 66) is arranged removably on the motor vehicle.

## Revendications

1. Pièce d'habillage destinée à un véhicule comprenant une aile et une porte latérale, et montée entre l'aile et la porte latérale, la pièce d'habillage (6, 16, 26, 46, 66) étant montée entre les segments d'extrémité (2a, 3a) tournés l'un vers l'autre de l'aile (2) et de la porte latérale (3),
**caractérisée en ce que**
les segments d'extrémité (2a, 3a) de l'aile (2) et de la porte latérale (3) s'étendent - lorsqu'observés transversalement à la direction de déplacement (FR) du véhicule - selon un angle (α) d'environ 45° par rapport à la verticale, la pièce d'habillage (6, 16, 26, 46, 66) s'étend également selon un angle (α) d'environ 45° par rapport à la verticale, et la pièce d'habillage (6, 16, 26, 46, 66) s'étend sur la totalité de la hauteur de l'aile (2), de sorte que l'aile (2) et la porte latérale (3) ne soient plus directement contigües.

2. Pièce d'habillage conforme à la revendication 1,
**caractérisée en ce que**
la surface de connexion avant ainsi que la surface de connexion arrière de la pièce d'habillage (6, 16, 26, 46, 66) affleurent la surface des composants de la carrosserie (2 à 5) voisins.

3. Pièce d'habillage conforme à la revendication 1 ou 2,
**caractérisée en ce qu'**
elle dépasse, au moins dans des zones partielles de son extension du contour de l'aile (2) et/ou de la porte latérale (3).

4. Pièce d'habillage conforme à l'une des revendications précédentes,
**caractérisée en ce qu'**
elle est montée entre le segment d'extrémité (2a) situé à l'opposé de la direction de déplacement d'une aile avant (2) et le segment d'extrémité (3a) tourné dans la direction de déplacement d'une porte latérale (3).

5. Pièce d'habillage conforme à l'une des revendications précédentes,
**caractérisée en ce qu'** elle délimite dans sa zone supérieure un capot frontal (4) et par un joint aérodynamique (5).

6. Pièce d'habillage conforme à l'une des revendications précédentes,
**caractérisée en ce qu'**
elle comporte une ouverture d'échange d'air (7).

7. Pièce d'habillage conforme à l'une des revendications précédentes,
**caractérisée en ce qu'**
elle comporte une unité d'éclairage, en particulier un indicateur de direction latéral (8, 18, 28, 48, 68) et/ou un feu de position et/ou un feu de route.

8. Pièce d'habillage conforme à l'une des revendications précédentes,
**caractérisée en ce qu'**
elle comporte une unité de détection, en particulier un capteur et/ou une caméra.

9. Pièce d'habillage conforme à l'une des revendications précédentes,
**caractérisée en ce que**
l'ouverture d'échange d'air (7, 17, 27, 47) est réalisée sous la forme d'un logement de réception de l'unité d'éclairage (8, 18, 28, 48) et/ou de l'unité de détection.

10. Pièce d'habillage conforme à l'une des revendications précédentes,
**caractérisée en ce que**
l'ouverture d'échange d'air (7, 17, 27, 47, 67) et/ou l'unité d'éclairage (8, 18, 28, 48, 68) et/ou l'unité de détection diffère(nt) de la pièce d'habillage (6, 16, 26, 46, 66) concernant sa(leur) matériau constitutif et/ou sa(leur) configuration de surface.

11. Pièce d'habillage conforme à l'une des revendications précédentes,
**caractérisée en ce qu'**
elle est réalisée en un matériau métallique.

12. Pièce d'habillage conforme à l'une des revendications précédentes,
**caractérisée en ce que**
la pièce d'habillage (66) comporte au moins un logement (80, 81, 82) qui est occupé au moins partiellement par un composant de l'ouverture d'échange d'air (7, 17, 27, 47, 67) et/ou de l'unité d'éclairage (8, 18, 28, 48, 68) et/ou de l'unité de détection.

13. Pièce d'habillage conforme à l'une des revendications précédentes,
**caractérisée en ce que**
l'ouverture d'échange d'air (7, 17, 27, 47, 67) et l'unité d'éclairage (8, 18, 28, 48, 68) et/ou l'unité de détection ont des formes géométriques venant en prise l'une dans l'autre.

14. Pièce d'habillage conforme à l'une des revendications précédentes,
**caractérisée en ce que**
la pièce d'habillage (66) est complétée par un élément de support (83) situé au-dessous de celle-ci dans la position de montage sur le véhicule, et pouvant être assemblé à un composant avant le montage sur le véhicule, sur l'élément de support (83) étant monté au moins un composant de l'ouverture d'échange d'air (67) et/ou de l'unité d'éclairage (68) et/ou de l'unité de détection.

15. Pièce d'habillage conforme à l'une des revendications précédentes,
**caractérisée en ce que**
l'unité d'éclairage (28, 48) et/ou l'unité de détection forme(nt) au moins dans des segments (37, 57) des zones (33, 53) de l'ouverture d'échange d'air (27, 47).

16. Pièce d'habillage conforme à la revendication 15,
**caractérisée en ce que**
l'ouverture d'échange d'air (27, 47) comporte une paroi de limitation externe et une paroi de limitation interne (31, 51, 32, 52), les parois de limitation (31, 51, 32, 52) étant décalées dans la direction transversale du véhicule, et l'unité d'éclairage (28, 48) et/ou l'unité de détection comprenant un recouvrement (37, 57) qui se connecte à la paroi de limitation externe ou à la paroi de limitation interne (31, 52).

17. Pièce d'habillage conforme à l'une des revendications précédentes,
**caractérisée en ce qu'**
elle est montée amovible sur le véhicule.
